# EUROPÄISCHE PATENTSCHRIFT

(11) **EP 1 181 469 B1**
(45) Veröffentlichungstag und Bekanntmachung des Hinweises auf die Patenterteilung: **22.10.2003**
(21) Anmeldenummer: 01927606.2
(22) Anmeldetag: 27.03.2001
(51) Int. Cl.: F16H 59/02

(54) **SCHALTVORRICHTUNG FÜR EIN AUTOMATIKGETRIEBE EINES KRAFTFAHRZEUGES**
SHIFTING DEVICE FOR AN AUTOMATIC GEARBOX IN A MOTOR VEHICLE
DISPOSITIF DE CHANGEMENT DE VITESSES POUR UNE BOITE AUTOMATIQUE D'UN VEHICULE AUTOMOBILE

(30) Priorität: 28.03.2000 DE 10015079
(43) Veröffentlichungstag der Anmeldung: 27.02.2002
(73) Patentinhaber: ZF Lemförder Metallwaren AG, 49441 Lemförde (DE)
(72) Erfinder: GIEFER, Andreas, 49448 Lemförde (DE); MEYER, Jörg, 49419 Wagenfeld (DE)
(86) Internationale Anmeldenummer: DE0101154
(87) Internationale Veröffentlichungsnummer: WO01073320

(56) Entgegenhaltungen:
- EP-A- 0 575 658
- EP-A- 0 943 843
- WO-A-00/03162
- DE-A- 19 756 034

## Beschreibung

Die Erfindung betrifft eine Schaltvorrichtung zur Übertragung von Schaltbefehlen an ein Automatikgetriebe eines Kraftfahrzeuges, mit einem Gehäuse, einer Wählachse und einer Schaltachse die orthogonal zueinander angeordnet sind und einen bezogen auf seine Neutralstellung in mindestens einer äußeren rechten und einer äußeren linken Schaltgasse schwenkbar gelagerten Schalthebel und einem Mittel zur Übertragung von Schaltbefehlen aufgrund einer Bewegung des Schalthebels an das Automatikgetriebe.

Eine ähnliche Schaltvorrichtung ist aus der Patentanmeldung DE 197 56 034 A1 bekannt. Diese offenbart eine Schaltvorrichtung für ein Automatikgetriebe eines Kraftfahrzeuges, welche eine kraftlose Übertragung von Schaltbefehlen an ein Automatikgetriebe eines Kraftfahrzeuges ermöglicht. Diese Schaltvorrichtung verfügt über ein Gehäuse, einen um zwei Achsen in zwei Schaltgassen schwenkbar gelagerten Schalthebel, eine Detektionsvorrichtung für die Schalthebelposition und eine Übertragungsvorrichtung für die Schaltbefehle an das Automatikgetriebe.

Eine gattungsgemäße Schaltvorrichtung ist aus der EP 0 575 658 A1 bekannt.

Ein Problem dieser bekannten Schaltvorrichtung liegt in der sehr spezifischen und aufwendigen Bauweise, da sie je nach Ausführung des Fahrzeuges als Rechts- oder Linkslenker in zwei unterschiedlichen spiegelsymmetrischen Varianten zueinander ausgestaltet werden muß. Solche Varianten bedingen kleine Stückzahlen und damit ungünstig hohe Produktionskosten und logistische Probleme.

Es ist daher Aufgabe der Erfindung, eine Schaltvorrichtung zur Übertragung von Schaltbefehlen an ein Automatikgetriebe eines Kraftfahrzeuges zur Verfügung zu stellen, welche es einerseits ermöglicht, unter Verwendung identischer Bauteile, sowohl in Rechts- als auch in Linkslenkerfahrzeugen verwendet zu werden, andererseits durch Produktion möglichst hoher Stückzahlen weniger Bauteile für unterschiedliche Anforderungen niedrige Produktionskosten zu erreichen und gleichzeitig eine aufwendige Logistik erübrigt, die durch eine Vielzahl von unterschiedlichen Schaltvorrichtungen für unterschiedliche Fahrzeuge entsteht.

Die Aufgabe der Erfindung wird durch eine Schaltvorrichtung mit den Merkmalen des Anspruches 1 gelöst.

Demgemäß wird vorgeschlagen, eine an sich bekannte Schaltvorrichtung zur Übertragung von Schaltbefehlen an ein Automatikgetriebe eines Kraftfahrzeuges, welche ein Gehäuse, eine Wählachse und eine Schaltachse die orthogonal zueinander angeordnet sind und einen bezogen auf seine Neutralstellung in mindestens eine äußere rechte und eine äußere linke Schaltgasse schwenkbar gelagerten Schalthebel und ein Mittel zur Übertragung von Schaltbefehlen aufgrund einer Bewegung des Schalthebels an das Automatikgetriebe, aufweist, dahingehend zu verbessern, daß wenigstens zwei separate, seitlich angeordnete und um jeweils eine gehäusefeste Hilfsachse verschwenkbare Rastierhebel vorgesehen sind, so daß der Schalthebel mittelbar oder unmittelbar in die Rastierhebel eingreifen kann.

Hierdurch wird ein einfacher Aufbau der Schaltvorrichtung erreicht, der es ermöglicht, diese unter Verwendung identischer Bauteile für Schaltvorrichtungen für unterschiedliche Fahrzeugen zu verwenden. Außerdem können hohe Stückzahlen gleicher Bauteile für Schaltvorrichtungen unterschiedlicher Fahrzeuge erreicht werden und zusätzlich wird auch die notwendige Logistik vereinfacht.

Für eine möglichst hohe Symmetrie der Bauteile der Schaltvorrichtung kann es vorteilhaft sein, wenn die Schaltachse und die Wählachse in einer Ebene liegen.

Um unnötige Reibung an Eingriffsstellen zu verhindern ist es vorteilhaft, wenn die Hilfsachsen der Rastierhebel derart angeordnet sind, daß die Rastierhebel und der Schalthebel zumindest innerhalb einer Schaltgasse um eine gemeinsame Achslinie schwenkbar sind.

Vorteilhaft können weiterhin die Rastierhebel gegenüberliegend zu ihrer Hilfsachse in einer gehäusefesten Führung verlaufen, so daß keine zu großen seitlichen Hebelkräfte auf die Lagerung der Rastierhebel wirken und diese dadurch einfach gestaltet werden kann.

Wird die Schaltvorrichtung zur kraftlosen Übertragung von Schaltbefehlen ("Shift by Wire"-Schaltung) ausgelegt, so kann das Mittel zur Übertragung von Schaltbefehlen mindestens zwei Träger für Detektoren für die Schalthebelposition aufweisen, wobei zwei Befestigungsvorrichtungen für die zwei Träger derart vorgesehen werden, daß beide Träger an beiden Befestigungsvorrichtungen wechselseitig funktionsfähig befestigbar sind. Auf diese Art kann die Schaltvorrichtung durch Austauschen der Träger für Links- und Rechtslenkerfahrzeuge verwendet werden.

Vorteilhaft können hierbei die beiden Befestigungsvorrichtungen und/oder die beiden Träger bezüglich ihrer Befestigungspunkte und/oder die beiden Träger identisch ausgeführt werden. Außerdem können die Träger und die Befestigungsvorrichtungen für die Träger derart ausgebildet sein, daß sie angeklippst, angesteckt oder angeschraubt werden.

Soll eine möglichst kompakte Bauweise und ein einfacher Herstellungsprozeß erreicht werden, so können die Träger als Leiterplatten mit darauf befestigten Detektoren und gegebenenfalls einer Betriebselektronik für die Detektoren für die Übertragung der Schaltbefehle ausgeführt sein.

Zur Führung des Schalthebels in den Schaltgassen kann eine Schaltkulisse vorgesehen werden, welche die Schaltwege vorgibt. Hierbei ist es wieder besonders vorteilhaft, wenn die beispielsweise in die Abdeckung des Gehäuses eingebrachte Schaltkulisse derart ausgeführt ist, daß sie in zwei, um 180° versetzte Positionen an der Schaltvorrichtung befestigbar ist. Somit kann eine einzige Schaltkulisse sowohl für Links- als auch für Rechtslenkerfahrzeuge eingesetzt werden.

Wird der Schalthebel zweiteilig ausgeführt, wobei ein erster Teil schwenkbar um die beiden Achsen gelagert ist und ein zweiter Teil lösbar, vorzugsweise über eine Steck- oder Schraubverbindung, mit dem ersten Teil verbunden ist, kann durch einen einfachen Austausch des lösbaren Teils des Schalthebels die gleiche Schaltvorrichtung auch in Fahrzeugen eingesetzt werden, deren Relativposition der Schaltvorrichtung zum Fahrersitz unterschiedlich ist. Als Beispiel hierfür sei der Einsatz einer solchen Schaltvorrichtung sowohl in einem PKW als auch in einem LKW genannt. Hierbei wird lediglich für den LKW ein verlängertes zweites Teil des Schalthebels gegen ein kurzes Teil ausgetauscht, so daß ein notwendigerweise höher liegende Position des Schaltknaufes im LKW erreicht wird.

Für eine angenehmes Schaltgefühl und die Positionierung des Schalthebels in unterschiedlichen Schaltstellungen bei einer Kraftlosübertragung der Schaltbefehle können die beiden Rastierhebel jeweils mit einer federbelasteten Kugel oder Rolle an einer Rastierung anliegen.

Eine vorteilhafte Ausgestaltung der Rastierungen kann darin liegen, daß die Rastierungen auf separaten, austauschbaren Klötzen angebracht werden und für die Klötze gehäusefeste Haltevorrichtungen vorgesehen sind. Auch hierdurch wird eine weitergehende Modularität der Schaltvorrichtung erreicht und es ermöglicht, die Schaltvorrichtung auf einfache Weise an unterschiedliche Anforderungen anzupassen. Beispielsweise kann die gleiche Schaltvorrichtung einfach für ein 4- oder 5-Ganggetriebe durch Austauschen der Klötze und gegebenenfalls der Sensorik verwendet werden.

Eine vorteilhafte Ausführung der Klötze sieht vor, daß die austauschbaren Klötze auch die Führungsfunktion der Rastierhebel aufweisen. Weiterhin können die austauschbaren Klötze und die gehäusefeste Haltevorrichtungen hierfür derart gestaltet sein, daß wechselseitig die Klötze ausgetauscht werden können.

Zur Vereinfachung der Produktion ist es weiterhin hilfreich, wenn die beiden Rastierhebel eine identische Form aufweisen.

Wird die Schaltvorrichtung im Zusammenhang mit einer Übertragung der Schaltbefehle über einen Seilzug - entweder direkt an ein Getriebe oder zur Betätigung einer entfernt angeordneten Sensorik - genutzt, so kann zumindest ein Rastierhebel einen Ansatz für einen Seilzug aufweisen, der vorzugsweise so gestaltet ist, daß der Seilzug in zwei gegenläufigen Lagen befestigbar ist.

Weitere Merkmale und Vorteile der Erfindung ergeben sich aus den Unteransprüchen und der nachfolgenden Beschreibung eines bevorzugten Ausführungsbeispieles unter Bezugnahme auf die Zeichnungen.

Die Figuren zeigen im Einzelnen:
- Figuren 1a bis 1f:: 6 unterschiedliche Ansichten der Schaltvorrichtung mit dem Schalthebel in Parkposition;
- Figuren 2a bis 2f:: 6 unterschiedliche Ansichten der Schaltvorrichtung mit dem Schalthebel in Neutralposition;
- Figuren 3a bis 3f:: 6 unterschiedliche Ansichten der Schaltvorrichtung mit dem Schalthebel in der Automatikschaltgasse in R-Position;
- Figuren 4a bis 4f:: 6 unterschiedliche Ansichten der Schaltvorrichtung mit dem Schalthebel in der Automatikschaltgasse in Fahrstellung;
- Figuren 5a bis 5f:: 6 unterschiedliche Ansichten der Schaltvorrichtung mit dem Schalthebel in Mittelstellung in der sequentiellen Schaltgasse;
- Figur 6:: Längsschnitt durch die Schaltvorrichtung mit Ansicht der Rastierung eines Rastierhebels;
- Figur 7:: Rastierung eines Rastierhebels mit austauschbarem Klotz;
- Figur 8:: Schaltvorrichtung mit seitlich angebrachten Leiterplatten;
- Figur 9:: Aufsicht auf Leiterplatte/Träger mit Sensoren für die Automatikschaltgasse;
- Figur 10:: Aufsicht auf Leiterplatte/Träger mit Sensoren für die sequentielle Schaltgasse.

Die Figurensätze 1a - 1f bis 5a - 5 f zeigen die erfindungsgemäße Schaltvorrichtung in jeweils 6 verschiedenen Ansichten, wobei sich die 5 einzelnen Figurensätze durch 5 unterschiedliche Positionen des Schalthebels unterscheiden.

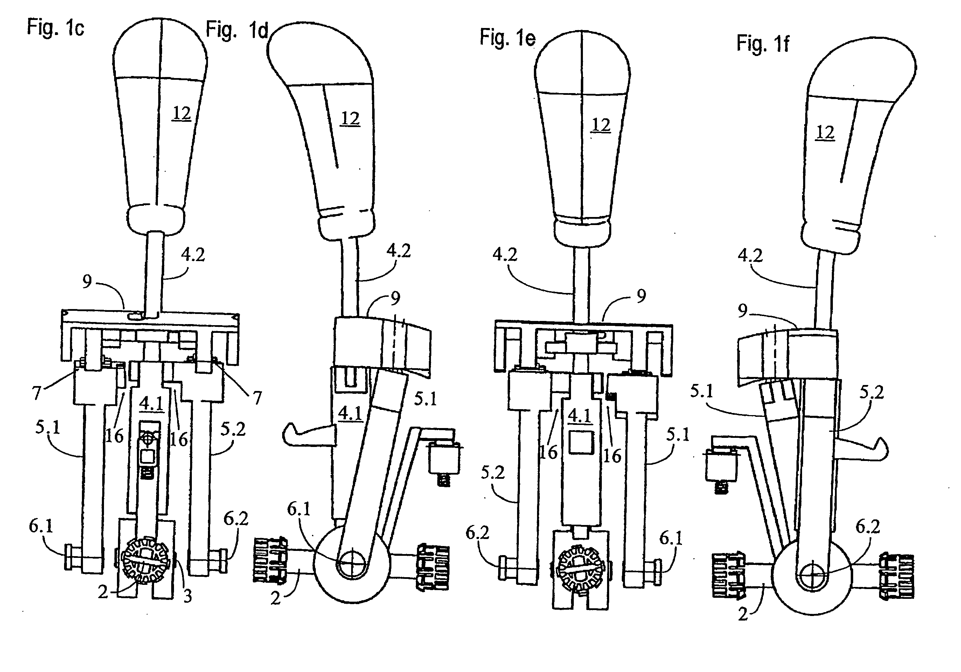

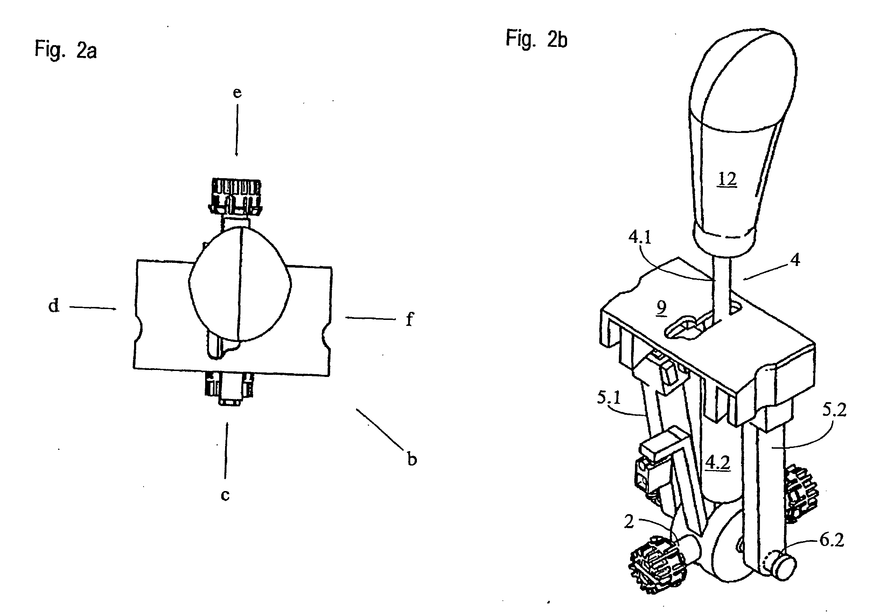

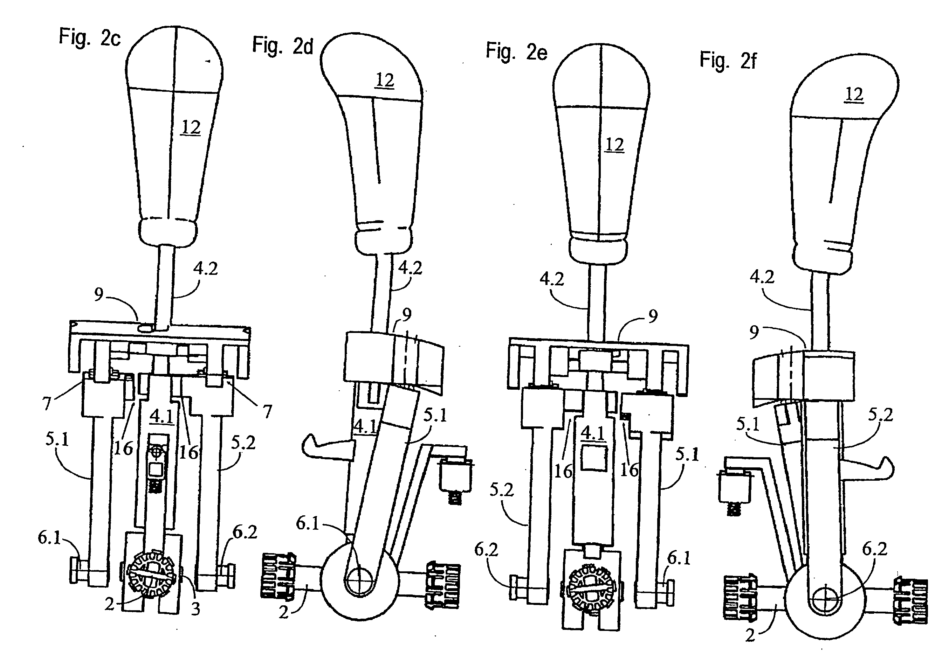

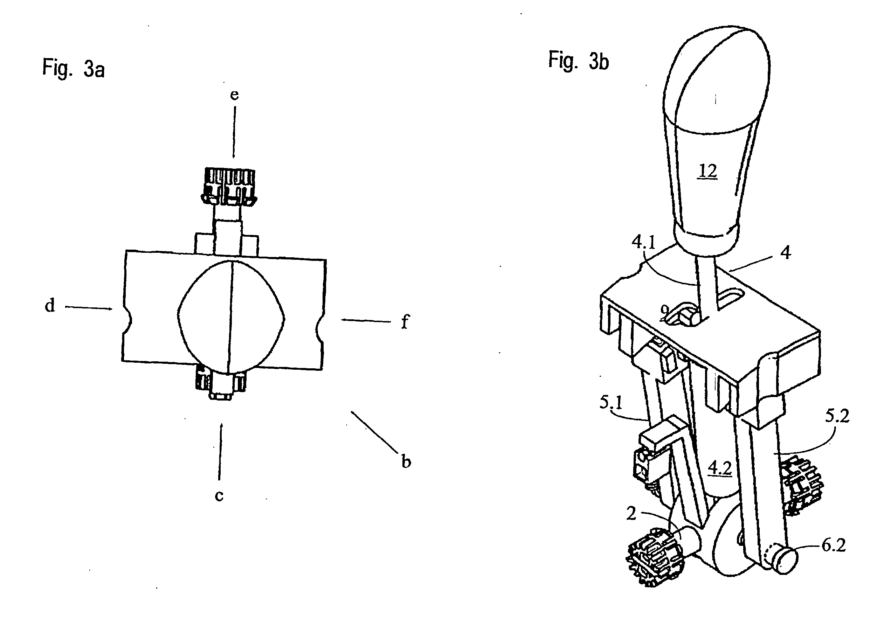

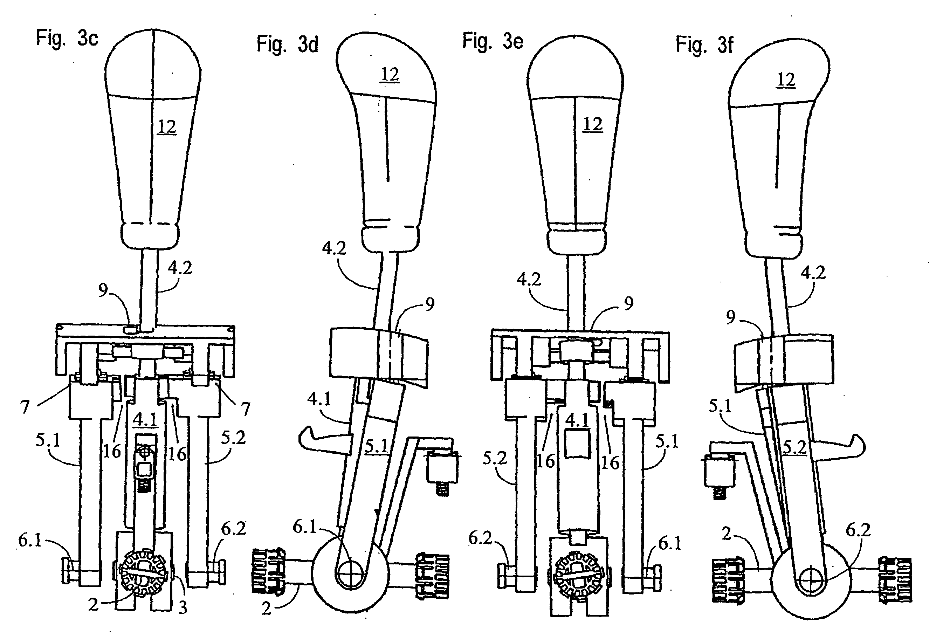

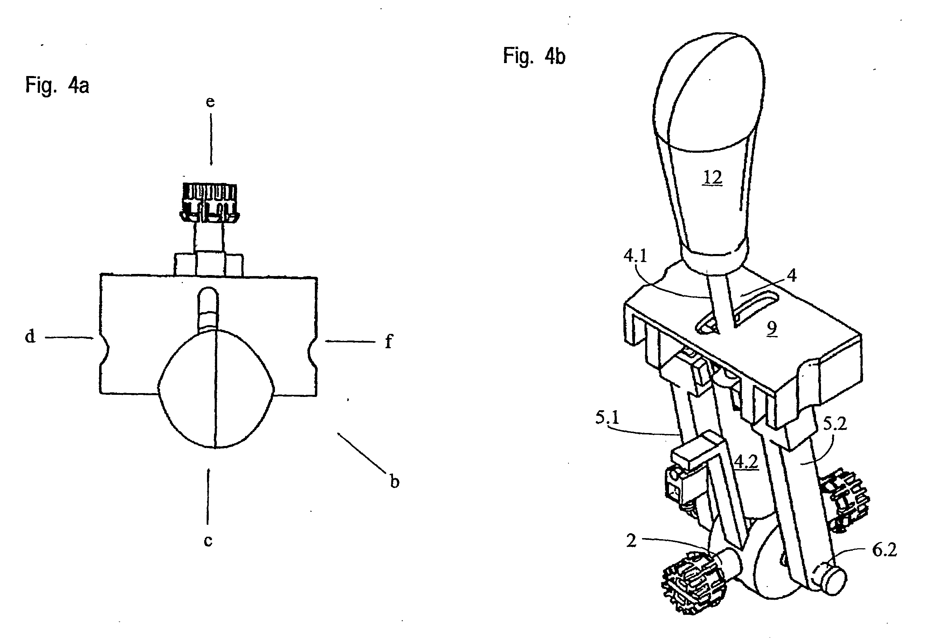

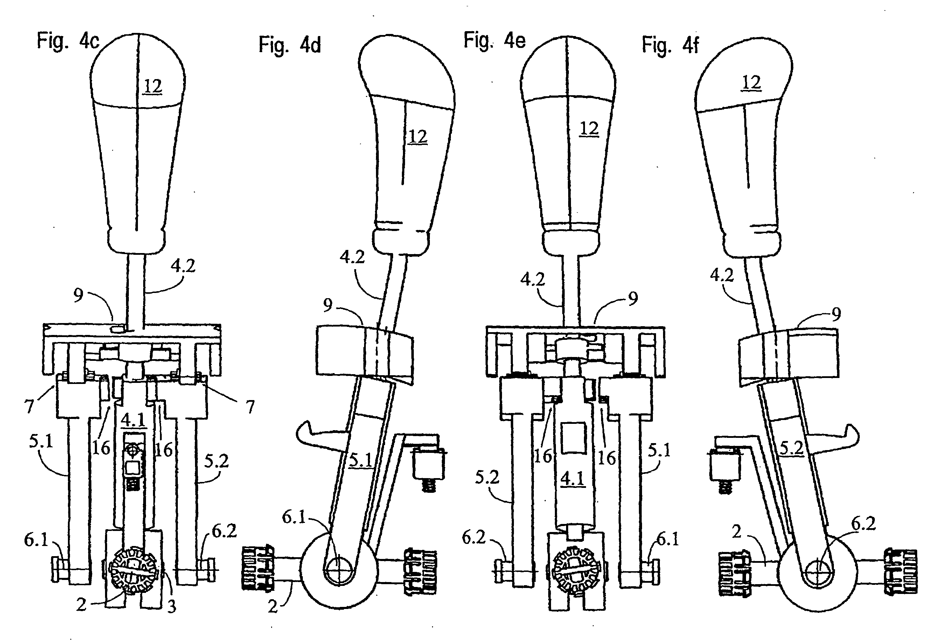

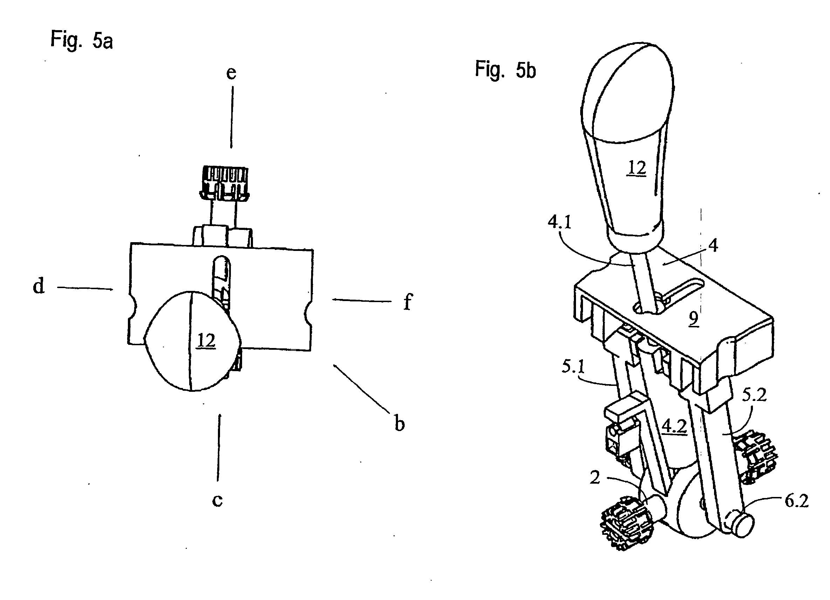

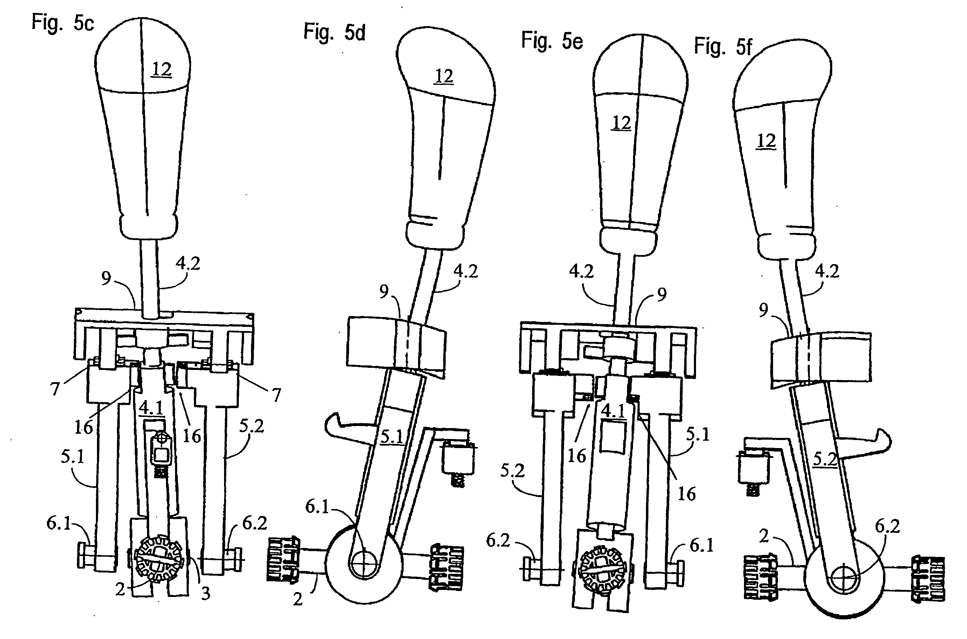

Die Figuren 1a, 2a, 3a, 4a und 5a zeigen eine Aufsicht von oben auf die erfindungsgemäße Schaltvorrichtung 1. Zur besseren Orientierung sind in diesen Aufsichten durch Pfeile und mit den zugeordneten Buchstaben b bis f die Ansichten angegeben, die den Figuren mit den gleichen Endbuchstaben aus den Figurensätzen entsprechen.

Die Schaltvorrichtung 1 verfügt über einen Schaltknauf 12, einen in der Draufsicht nicht sichtbaren Schalthebel 4, der in einer Schaltkulisse 9 verläuft, und auf der rechten Seite über eine Automatikschaltgasse und auf der linken Seite über eine sequentielle Schaltgasse, für sequentielles Schalten des Automatikgetriebes.

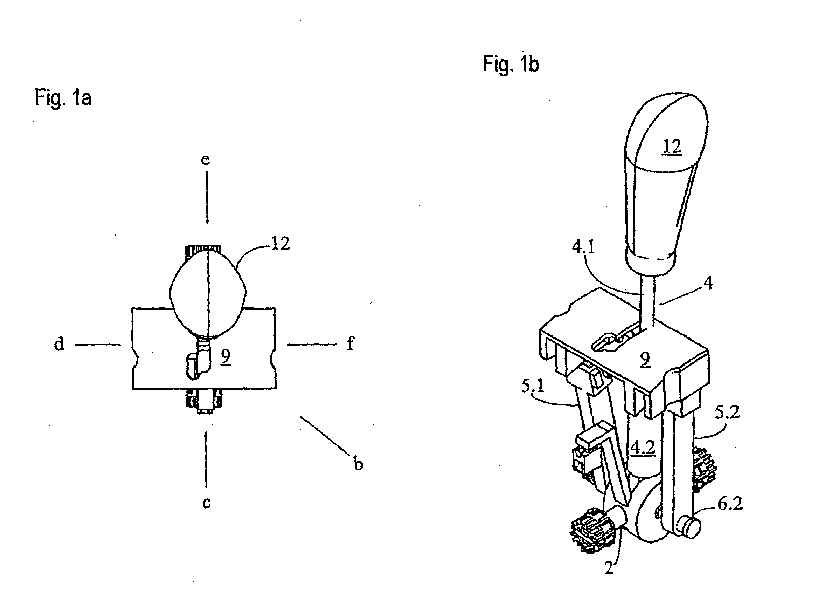

Die Figur 1b zeigt eine Schrägsicht der erfindungsgemäßen Schaltvorrichtung 1, während die Figuren 1c bis 1f Seitenansichten (entsprechend den Angaben aus der Figur 1a) zeigen. Das zur Schaltvorrichtung gehörende Gehäuse ist aus Übersichtlichkeitsgründen in den gezeigten Figuren nicht dargestellt.

Die Schaltvorrichtung 1 weist einen zweiteiligen Schalthebel 4 auf, der aus einem ersten Teil 4.1 und einem zweiten, einsteckbaren Teil 4.2 besteht. Der Schalthebel 4 ist an seinem unteren Ende um eine Wählachse 2 und einer Schaltachse 3 schwenkbar gelagert und wird durch die Schaltkulisse 9 in seinen Schaltgassen geführt. Seitlich des Schalthebels 4 befinden sich zwei Rastierhebel 5.1 und 5.2, die ebenfalls schwenkbar um eine erste Hilfsachse 6.1 und einer zweiten Hilfsachse 6.2 an ihrem unteren Ende gelagert sind. In der vorliegenden, besonderen Ausführung sind die beiden Hilfsachsen 6.1 und 6.2 koaxial zur Schaltachse 3 angeordnet, während die Wählachse, die ein seitliches Verschwenken des Schalthebels 4 zum Übergang zwischen den beiden Schaltgassen ermöglicht, in einer Ebene mit der Wählachse 2 liegt und diese damit also schneidet.

Die Rastierhebel 5.1 und 5.2 werden durch jeweils zwei unterschiedliche Rastierungen derart geführt, daß ein Einrasten des Schalthebels in den unterschiedlichen Schaltpositionen in den Schaltgassen spürbar wird.

Ein seitliches Verschwenken des Schalthebels um die Wählachse 2, welches entsprechend der Kulisse lediglich in einer Endposition der Automatikgasse möglich ist, wird ein Eingreifen des Schalthebels 4 in den ersten Rastierhebel 5.1 oder dem zweiten Rastierhebel 5.2 bewirkt. Der erste Rastierhebel 5.1 befindet sich im unmittelbaren Eingriff mit dem Schalthebel 4 durch die Eingriffselemente 17, wenn der Schalthebel 4 sich in der sequentiellen Schaltgasse befindet, während gleichzeitig die Verbindung zum zweiten Rastierhebel 5.2 gelöst ist. Umgekehrt greift der Schalthebel 4 in der Automatikschaltgasse in den zweiten Rastierhebel 5.2 durch Eingriffselemente 17 ein, während die Verbindung zum ersten Rastierhebel 5.1 aufgelöst ist. Die Eingriffselemente 17 sind in der gezeigten Ausführung als einfache Nut- und Federelemente ausgeführt, die beidseitig am unteren ersten Teils des Schalthebels und auf den Innenseiten der Rastierhebel integriert sind.

Ein Verschwenken des Schalthebels 4 um die Schaltachse 3 bewirkt damit eine gleichzeitige Bewegung des jeweils in Verbindung stehenden Rastierhebel 5.1 beziehungsweise 5.2, so daß über die Rastierhebel 5.1 und 5.2 die entsprechenden Schaltbefehle an das Automatikgetriebe übertragen werden können.

Die oben stehende Figurenbeschreibung der Figurensätze 1a-1f gilt sinngemäß auch für die Figurensätze 2a-2f bis 5a-5f, wobei sich die einzelnen Figurensätze lediglich durch die gezeigte Stellung des Schalthebels unterscheiden und wobei der Schalthebel sich in den Figurensätzen 1a-1f bis 4a-4f in der Automatikschaltgasse befindet, während der Figurensatz 5a-5f den Schalthebel in der sequentiellen Schaltgasse zeigt.

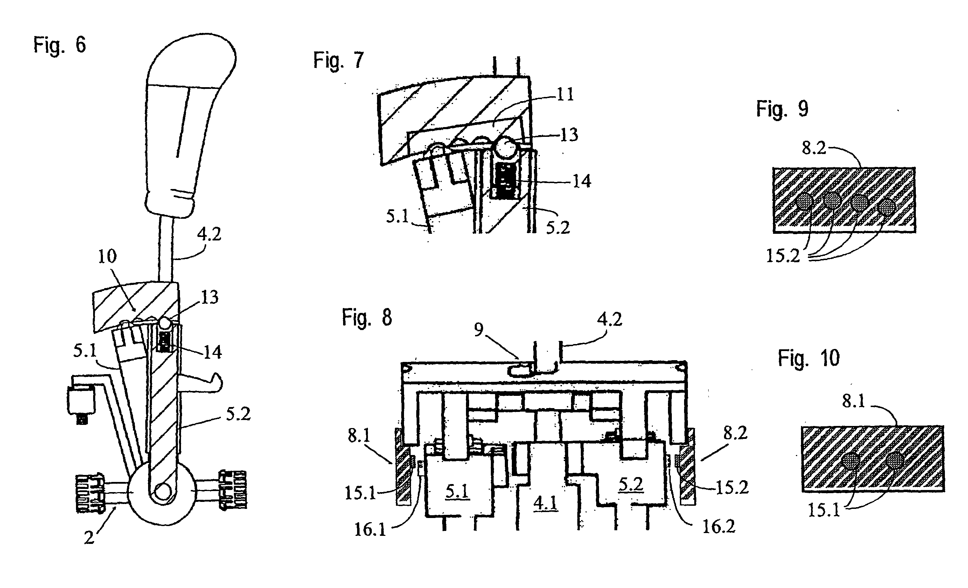

Die Figur 6 zeigt einen Längsschnitt durch die erfindungsgemäße Schaltvorrichtung im Bereich der Rastierung 10 des Rastierhebels 5.2. Die Rastierung besteht in diesem Fall, da es sich um die Rastierung für die Automatikschaltgasse handelt, aus vier Einrastpunkten für die Kugel 13, die durch die Feder 14 gegen die Kontur der Rastierung 10 angedrückt wird.

Erfindungsgemäß kann diese Rastierung auch - wie es in der Figur 7 dargestellt ist - auf austauschbaren Klötzen angebracht werden. Auf diese Weise ist es möglich, zum Beispiel die Rastierungskonturen für die Automatikgasse und die Rastierungskontur für die sequentielle Schaltgasse durch ein Austauschen der Klötze 11 zu vertauschen, wobei allerdings in diesem Fall die Schaltkulisse ebenfalls, falls diese unsymmetrisch ausgeführt ist, gedreht oder gewendet werden muß.

Die Figur 8 zeigt schließlich eine Ausführung der erfindungsgemäßen Schaltvorrichtung mit einer Kraftlosübertragung der Schaltbefehle. Die Kraftlosübertragung der Schaltbefehle erfolgt hierbei durch eine entsprechende Übertragungselektronik, die auf zwei Trägern 8.1 und 8.2, die als Leiterplatten ausgebildet sind, aufgebracht ist. Die Träger 8.1 und 8.2 weisen auf ihrer zu den Rastierhebeln zugewandten Seite Sensoren 15.1 und 15.2 auf, die durch die Rastierhebelseitig aufgebrachten Geber 16.1 und 16.2 getriggert werden können und einen entsprechenden Schaltbefehl für das Automatikgetriebe auslösen können. Die Träger 8.1 und 8.2 sind derart ausgestaltet, daß ein einfaches wechselseitiges Austauschen möglich ist und auf diese Weise entweder unterschiedliche Schaltpositionen in der Automatikschaltgasse erreicht werden können oder auch ein Auswechseln zwischen der Automatikschaltgasse und der sequentiellen Schaltgasse erreicht werden kann.

Es ist noch zu erwähnen, daß die dargestellten Rastierhebel 5.1 und 5.2 der erfindungsgemäßen Schaltvorrichtung identisch ausgeführt sind, so daß eine einzige Form für die Herstellung solcher Rastierhebel ausreicht.

Die Figuren 9 und 10 zeigen schließlich eine Aufsicht auf zwei Träger beziehungsweise Leiterplatten 8.2 und 8.1 zur Detektion der Schalthebelpositionen in der Automatikschaltgasse beziehungsweise der sequentiellen Schaltgasse mit Sensoren 15.2 und 15.1. Die vier Sensoren 15.2 des Trägers 8.2 sind auf einem Kreisbogen angeordnet, dessen Achsmittelpunkt der Hilfsachse des entsprechenden Rastierhebels liegt und in ihrer Entfernung zueinander der Rastierung der Automatikschaltgasse entspricht, so daß eine Bewegung des zugeordneten Rastierhebels mit einem dort angebrachten Geber 16.2 in die Schaltpositionen entsprechende Schaltbefehle an ein angeschlossenes Automatikgetriebe auslöst. Die vier Sensoren detektieren auf dem Träger 8.2 der Figur 9 die Schaltpositionen P, R, N, D. Entsprechend weist der Träger 8.1 zwei Sensoren 15.1 auf, durch welche das Hoch- und Herunterschalten in der sequentiellen Schaltgasse detektiert werden kann, wenn der Schalthebel sich in dieser Schaltgasse befindet und damit in den Rastierhebel eingreift und diesen mit seiner Schaltbewegung mitnimmt. Die Formgebung der Träger ist erfindungsgemäß so gewählt, daß ein gegenseitiges Austauschen an der Schaltvorrichtung möglich ist, wobei lediglich die Befestigungspunkte und deren Lage identisch ausgeführt sein muß.

Insgesamt wird also durch die Erfindung eine Schaltvorrichtung zur Übertragung von Schaltbefehlen an ein Automatikgetriebe eines Kraftfahrzeuges angegeben, welche es ermöglicht, diese unter Verwendung identischer Bauteile für unterschiedliche Fahrzeuge zu verwenden, wobei hohe Stückzahlen gleicher Bauteile für unterschiedliche Fahrzeuge erreicht werden können und sich hierdurch die notwendige Logistik vereinfacht.

### Bezugszeichenliste:

- 1: Schaltvorrichtung
- 2: Wählachse
- 3: Schaltachse
- 4: Schalthebel
- 4.1: erster Teil
- 4.2: zweiter Teil
- 5.1: erster Rastierhebel
- 5.2: zweiter Rastierhebel
- 6.1: erste Hilfsachse
- 6.2: zweite Hilfsachse
- 7: Führung
- 8.1: 1. Träger / Leiterplatte
- 8.2: 2. Träger / Leiterplatte
- 9: Schaltkulisse
- 10: Rastierung
- 11: Klotz
- 12: Knauf
- 13: Kugel
- 14: Feder
- 15.1: Sensoren
- 15.2: Sensoren
- 16.1: Geber
- 16.2: Geber
- 17: Eingriffselemente

## Patentansprüche

1. Schaltvorrichtung (1) zur Übertragung von Schaltbefehlen an ein Automatikgetriebe eines Kraftfahrzeuges, mit einem Gehäuse, mit einer Wählachse (2) und mit einer Schaltachse (3), die orthogonal zueinander angeordnet sind, mit einem bezogen auf seine Neutralstellung innerhalb mindestens einer äußeren rechten und einer äußeren linken Schaltgasse schwenkbar gelagerten Schalthebel (4), und mit einem Mittel zur Übertragung von Schaltbefehlen aufgrund einer Bewegung des Schalthebels an das Automatikgetriebe, **dadurch gekennzeichnet, dass** mindestens zwei separate und um jeweils eine gehäusefeste Hilfsachse (6.1, 6.2) verschwenkbare Rastierhebel (5.1, 5.2) vorgesehen sind, in die der Schalthebel (4) mittelbar oder unmittelbar eingreifen kann.

2. Schaltvorrichtung (1) gemäß dem voranstehenden Anspruch 1, **dadurch gekennzeichnet, dass** die Hilfsachsen (6.1, 6.2) der Rastierhebel (5.1, 5.2) derart angeordnet sind, daß der jeweils im Eingriff befindliche Rastierhebel (5.1, 5.2) und der Schalthebel (4) um eine gemeinsame Achslinie schwenkbar sind.

3. Schaltvorrichtung (1) gemäß einem der voranstehenden Ansprüche 1 bis 2, **dadurch gekennzeichnet, dass** die Schaltachse (3) und die Wählachse (2) in einer Ebene liegen.

4. Schaltvorrichtung (1) gemäß einem der voranstehenden Ansprüche 1 bis 3, **dadurch gekennzeichnet, dass** die Rastierhebel (5.1, 5.2) gegenüberliegend zu ihrer Hilfsachse (6.1, 6.2) in einer, vorzugsweise gehäusefesten, Führung (7) verlaufen.

5. Schaltvorrichtung (1) gemäß einem der voranstehenden Ansprüche 1 bis 4, **dadurch gekennzeichnet, dass** das Mittel zur Übertragung von Schaltbefehlen wenigstens zwei Träger (8.1, 8.2) für Detektoren für die Schalthebelposition aufweist, wobei je Träger eine Befestigungsvorrichtung derart vorgesehen ist, dass die Träger an den Befestigungsvorrichtungen wechselseitig funktionsfähig befestigbar sind.

6. Schaltvorrichtung (1) gemäß dem voranstehenden Anspruch 5, **dadurch gekennzeichnet, dass** die beiden Befestigungsvorrichtungen identisch ausgeführt sind.

7. Schaltvorrichtung (1) gemäß einem der voranstehenden Ansprüche 5 bis 6, **dadurch gekennzeichnet, dass** die beiden Träger (8.1, 8.2) bezüglich ihrer Befestigungspunkte identisch ausgeführt sind.

8. Schaltvorrichtung (1) gemäß einem der voranstehenden Ansprüche 5 bis 7, **dadurch gekennzeichnet, dass** die beiden Träger (8.1, 8.2) identisch ausgeführt sind.

9. Schaltvorrichtung (1) gemäß einem der voranstehenden Ansprüche 5 bis 8, **dadurch gekennzeichnet, dass** die Träger (8.1, 8.2) und die Befestigungsvorrichtungen für die Träger derart ausgebildet sind, daß sie angeklippst oder angesteckt oder angeschraubt werden können.

10. Schaltvorrichtung (1) gemäß einem der voranstehenden Ansprüche 5 bis 9, **dadurch gekennzeichnet, dass** die Träger (8.1, 8.2) als Leiterplatten mit darauf befestigten Detektoren und einer Betriebselektronik für die Detektoren, gegebenenfalls für die Übertragung der Schaltbefehle, ausgeführt sind.

11. Schaltvorrichtung (1) gemäß einem der voranstehenden Ansprüche 1 bis 10, **dadurch gekennzeichnet, dass** eine Schaltkulisse (9) zur Führung des Schalthebels (4) in den Schaltgassen vorgesehen ist.

12. Schaltvorrichtung (1) gemäß dem voranstehenden Anspruch 11, **dadurch gekennzeichnet, dass** die Schaltkulisse (9) derart ausgeführt ist, daß sie in zwei, um 180° versetzte Positionen an der Schaltvorrichtung (1) befestigbar ist.

13. Schaltvorrichtung (1) gemäß einem der voranstehenden Ansprüche 1 bis 12, **dadurch gekennzeichnet, dass** der Schalthebel (4) zweiteilig ausgeführt ist, wobei ein erster Teil (4.1) schwenkbar um die beiden Achsen gelagert ist und ein zweiter Teil (4.2) lösbar, vorzugsweise über eine Steck- oder Schraubverbindung, mit dem ersten Teil (4.1) verbunden ist.

14. Schaltvorrichtung (1) gemäß einem der voranstehenden Ansprüche 1 bis 13, **dadurch gekennzeichnet, dass** die beiden Rastierhebel (5.1, 5.2) jeweils mit einer federbelasteten Kugel (13) oder Rolle an einer Rastierung (10) anliegen.

15. Schaltvorrichtung (1) gemäß dem voranstehenden Anspruch 14, **dadurch gekennzeichnet, dass** die Rastierungen (10) auf separaten, austauschbaren Klötzen (11) angebracht und für die Klötze (11) gehäusefeste Haltevorrichtungen vorgesehen sind.

16. Schaltvorrichtung (1) gemäß dem voranstehenden Anspruch 15, **dadurch gekennzeichnet, dass** die austauschbaren Klötze (11) auch die Führungsfunktion der Rastierhebel (5.1, 5.2) aufweisen.

17. Schaltvorrichtung (1) gemäß einem der voranstehenden Ansprüche 15 bis 16, **dadurch gekennzeichnet, dass** die austauschbaren Klötze (11) und die gehäusefeste Haltevorrichtungen hierfür derart gestaltet sind, daß wechselseitig die Klötze (11) ausgetauscht werden können.

18. Schaltvorrichtung (1) gemäß einem der voranstehenden Ansprüche 1 bis 17, **dadurch gekennzeichnet, dass** die beiden Rastierhebel (5.1, 5.2) eine identische Form aufweisen.

19. Schaltvorrichtung (1) gemäß einem der voranstehenden Ansprüche 1 bis 17, **dadurch gekennzeichnet, dass** zumindest ein Rastierhebel (5.1, 5.2) einen Ansatz für einen Seilzug aufweist, der gegebenenfalls in zwei Richtungen verwendet werden kann.

## Claims

1. Gearshift device (1) for transmitting shift commands to an automatic transmission of a motor vehicle, comprising a housing, a selector axle (2) and a shift axle (3) disposed orthogonally relative to one another, a shift lever (4), which is supported pivotally in relation to its neutral position inside at least one outer righthand and one outer lefthand shift gate, and a means of transmitting to the automatic transmission shift commands based on a movement of the shift lever, **characterized in that** at least two separate locking levers (5.1, 5.2) pivotable in each case about a housing-fixed auxiliary axle (6.1, 6.2) are provided, into which the shift lever (4) may engage indirectly or directly.

2. Gearshift device (1) according to the preceding claim 1, **characterized in that** the auxiliary axles (6.1, 6.2) of the locking levers (5.1, 5.2) are disposed in such a way that the locking lever (5.1, 5.2), which is engaged in each case, and the shift lever (4) are pivotable about a common axle line.

3. Gearshift device (1) according to one of the preceding claims 1 to 2, **characterized in that** the shift axle (3) and the selector axle (2) lie in one plane.

4. Gearshift device (1) according to one of the preceding claims 1 to 3, **characterized in that** the locking levers (5.1, 5.2) extend opposite their auxiliary axle (6.1, 6.2) in a, preferably housing-fixed, guide (7).

5. Gearshift device (1) according to one of the preceding claims 1 to 4, **characterized in that** the means of transmitting shift commands comprises at least two carriers (8.1, 8.2) for detectors of the shift lever position, wherein for each carrier a fastening device is provided in such a way that the carriers are fastenable to the fastening devices so as to be capable of either-way operation.

6. Gearshift device (1) according to the preceding claim 5, **characterized in that** the two fastening devices are of an identical design.

7. Gearshift device (1) according to one of the preceding claims 5 to 6, **characterized in that** the two carriers (8.1, 8.2) with regard to their fastening points are of an identical design.

8. Gearshift device (1) according to one of the preceding claims 5 to 7, **characterized in that** the two carriers (8.1, 8.2) are of an identical design.

9. Gearshift device (1) according to one of the preceding claims 5 to 8, **characterized in that** the carriers (8.1, 8.2) and the fastening devices for the carriers are designed in such a way that they may be clipped, plugged or screwed on.

10. Gearshift device (1) according to one of the preceding claims 5 to 9, **characterized in that** the carriers (8.1, 8.2) are designed as printed-circuit boards with detectors fastened thereon and with an electronic operating device for the detectors, optionally for the transmission of the shift commands.

11. Gearshift device (1) according to one of the preceding claims 1 to 10, **characterized in that** a contoured shift guide (9) is provided for guiding the shift lever (4) in the shift gates.

12. Gearshift device (1) according to the preceding claim 11, **characterized in that** the contoured shift guide (9) is designed in such a way that it is fastenable to the gearshift device (1) in two positions offset by 180°.

13. Gearshift device (1) according to one of the preceding claims 1 to 12, **characterized in that** the shift lever (4) is of a two-part design, wherein a first part (4.1) is mounted pivotally about the two axles and a second part (4.2) is connected releasably, preferably by a plug-in or screwed connection, to the first part (4.1).

14. Gearshift device (1) according to one of the preceding claims 1 to 13, **characterized in that** the two locking levers (5.1, 5.2) lie in each case with a springloaded ball (13) or roller against a locking detent (10).

15. Gearshift device (1) according to the preceding claim 14, **characterized in that** the locking detents (10) are provided on separate, exchangeable blocks (11) and housing-fixed holding devices are provided for the blocks (11).

16. Gearshift device (1) according to the preceding claim 15, **characterized in that** the exchangeable blocks (11) also perform the function of guiding the locking levers (5.1, 5.2).

17. Gearshift device (1) according to one of the preceding claims 15 to 16, **characterized in that** the exchangeable blocks (11) and the housing-fixed holding devices for the latter are fashioned in such a way that the blocks (11) are mutually exchangeable.

18. Gearshift device (1) according to one of the preceding claims 1 to 17, **characterized in that** the two locking levers (5.1, 5.2) are of an identical shape.

19. Gearshift device (1) according to one of the preceding claims 1 to 17, **characterized in that** at least one locking lever (5.1, 5.2) has a projection for a control cable, which may be used optionally in two directions.

## Revendications

1. Dispositif de changement de vitesse (1) pour transmettre des instructions de commutation à une transmission automatique d'un véhicule automobile, comportant un boîtier avec un axe de sélection (2) et avec un axe de commutation (3) qui sont disposés perpendiculairement l'un à l'autre, comportant un levier de changement de vitesse (4) monté pivotant par rapport à sa position neutre à l'intérieur d'au moins une voie de commutation extérieure droite et une voie de commutation extérieure gauche, et comportant un moyen pour transmettre les instructions de commutation sur la base d'un mouvement du levier de changement de vitesse à la transmission automatique, **caractérisé en ce que** sont prévus au moins deux leviers d'arrêt (5.1, 5.2) séparés pouvant pivoter autour d'un axe auxiliaire (6.1, 6.2) respectif solidaire du boîtier, dans lesquels le levier de changement de vitesse (4) peut s'engager directement ou indirectement.

2. Dispositif de changement de vitesse (1) selon la revendication 1 précédente, **caractérisé en ce que** les axes auxiliaires (6.1, 6.2) des leviers d'arrêt (5.1, 5.2) sont disposés de manière que le levier d'arrêt (5.1, 5.2) se trouvant en engagement et le levier de changement de vitesse (4) puissent pivoter autour d'une ligne axiale commune.

3. Dispositif de changement de vitesse (1) selon l'une des revendications 1 ou 2 précédentes, **caractérisé en ce que** l'axe de commutation (3) et l'axe de sélection (2) se situent dans un plan.

4. Dispositif de changement de vitesse (1) selon l'une des revendications 1 à 3 précédentes, **caractérisé en ce que** les leviers d'arrêt (5.1, 5.2) s'étendent en vis-à-vis par rapport à leur axe auxiliaire (6.1, 6.2) dans un guide (7), de préférence solidaire du boîtier.

5. Dispositif de changement de vitesse (1) selon l'une des revendications 1 à 4 précédentes, **caractérisé en ce que** le moyen de transmission d'instructions de commutation comporte au moins deux supports (8.1, 8.2) pour des détecteurs de la position du levier de changement de vitesse, un dispositif de fixation étant prévu pour chaque support de manière que les supports puissent être fixés alternativement aux dispositifs de fixation de façon fonctionnelle.

6. Dispositif de changement de vitesse (1) selon la revendication 5 précédente, **caractérisé en ce que** les deux dispositifs de fixation sont réalisés à l'identique.

7. Dispositif de changement de vitesse (1) selon l'une des revendications 5 ou 6 précédentes, **caractérisé en ce que** les deux supports (8.1, 8.2) sont réalisés à l'identique en ce qui concerne leurs points de fixation.

8. Dispositif de changement de vitesse (1) selon l'une des revendications 5 à 7 précédentes, **caractérisé en ce que** les deux supports (8.1, 8.2) sont réalisés à l'identique.

9. Dispositif de changement de vitesse (1) selon l'une des revendications 5 à 8 précédentes, **caractérisé en ce que** les supports (8.1, 8.2) et les dispositifs de fixation des supports sont réalisés de manière qu'ils puissent être clipsés, enfichés ou vissés.

10. Dispositif de changement de vitesse (1) selon l'une des revendications 5 à 9 précédentes, **caractérisé en ce que** les supports (8.1, 8.2) sont réalisés en tant que plaquettes à circuits imprimés avec détecteurs fixés sur celles-ci et une électronique d'exploitation pour fonctionnement pour les détecteurs, éventuellement pour la transmission des instructions de commutation.

11. Dispositif de changement de vitesse (1) selon l'une des revendications 1 à 10 précédentes, **caractérisé en ce qu'**une coulisse de commutation (9) est prévue pour guider le levier de changement de vitesse (4) dans les voies de commutation.

12. Dispositif de changement de vitesse (1) selon la revendication 11 précédente, **caractérisé en ce que** la coulisse de commutation (9) est réalisée de manière qu'elle puisse être fixée sur le dispositif de changement de vitesse (1) dans deux positions décalées de 180°.

13. Dispositif de changement de vitesse (1) selon l'une des revendications 1 à 12 précédentes, **caractérisé en ce que** le levier de changement de vitesse (4) est réalisé en deux parties, une première partie (4.1) étant montée de manière à pouvoir pivoter autour des deux axes et une deuxième partie (4.2) étant reliée de manière séparable à la première partie (4.1), de préférence par une liaison à emboîtement ou à vis.

14. Dispositif de changement de vitesse (1) selon l'une des revendications 1 à 13 précédentes, **caractérisé en ce que** les deux leviers d'arrêt (5.1, 5.2) s'appliquent chacun par une bille (13) soumise à l'action d'un ressort ou un rouleau, contre un cran d'arrêt (10).

15. Dispositif de changement de vitesse (1) selon la revendication 14 précédente, **caractérisé en ce que** les crans d'arrêt (10) sont placés sur des blocs (11) séparés échangeables et pour les blocs (11) sont prévus des dispositifs de maintien solidaires du boîtier.

16. Dispositif de changement de vitesse (1) selon la revendication 15 précédente, **caractérisé en ce que** les blocs (11) échangeables présentent aussi la fonction de guidage des leviers d'arrêt (5.1, 5.2).

17. Dispositif de changement de vitesse (1) selon l'une des revendications 15 ou 16 précédentes, **caractérisé en ce que** les blocs (11) échangeables et les dispositifs de maintien solidaires du boîtier sont conçus pour cela de manière que les blocs (11) puissent être échangés réciproquement.

18. Dispositif de changement de vitesse (1) selon l'une des revendications 1 à 17 précédentes, **caractérisé en ce que** les deux leviers d'arrêt (5.1, 5.2) présentent une forme identique.

19. Dispositif de changement de vitesse (1) selon l'une des revendications 1 à 17 précédentes, **caractérisé en ce qu'**au moins un levier d'arrêt (5.1, 5.2) comporte un appendice pour un câble de traction qui peut être utilisé éventuellement dans deux directions.
